## Europäisches Patentamt
## European Patent Office
## Office européen des brevets

(19)

(11) Veröffentlichungsnummer: **0 159 404**
**B1**

(12)

# EUROPÄISCHE PATENTSCHRIFT

(45) Veröffentlichungstag der Patentschrift:
08.04.87

(51) Int. Cl.⁴: **B 60 H 1/00,** F 04 D 17/04

(21) Anmeldenummer: 84115577.3

(22) Anmeldetag: 17.12.84

(54) Heiz- bzw. Klimaanlage für Kraftfahrzeuge mit selbsttätiger Innenraumluft-Temperaturregelung.

(30) Priorität: 19.03.84 DE 3410019

(43) Veröffentlichungstag der Anmeldung:
30.10.85 Patentblatt 85/44

(45) Bekanntmachung des Hinweises auf die Patenterteilung:
08.04.87 Patentblatt 87/15

(84) Benannte Vertragsstaaten:
DE FR GB IT SE

(56) Entgegenhaltungen:
DE-A-1 503 591
DE-A-3 221 612
FR-A-657 712
FR-A-1 359 430
FR-A-2 317 116
FR-A-2 415 270
FR-A-2 496 016
FR-A-2 507 700
GB-A-548 049
GB-A-2 060 069

PATENTS ABSTRACTS OF JAPAN, Band 6, Nr. 236
(M-173) 1114 , 25. November 1982

(73) Patentinhaber: Siemens Aktiengesellschaft Berlin
und München, Wittelsbacherplatz 2, D-8000
München 2 (DE)

(72) Erfinder: Heger, Siegfried, Dipl.- Ing. (FH),
Flürleinstrasse 12, D-8700 Würzburg 25 (DE)

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

## Beschreibung

Die Erfindung bezieht sich auf eine Heiz- bzw. Klimaanlage für Kraftfahrzeuge mit selbsttätiger Inenraumluft-Temperaturregelung gemäß Oberbegriff des Anspruchs 1; eine derartige Heiz- und Klimaanlage ist durch offenkundige Vorbenutzung bekannt und z.B. in der JP-A-57 134 315 beschrieben.

Bei dieser bekannten automatischen Heiz- bzw. Klimaanlage ist zur Erfassung des jeweiligen Istwertes der Innenraumluft-Temperatur ein gesonderter kleiner Zusatzventilator hinter dem Armaturenbrett außerhalb des Innenraumes installiert, der über eine Öffnung im Armaturenbrett einen geringen Anteil der Innenraumluft über einen in seinen Luftstrom hinter dem Armaturenbrett befindlichen Sensor ansaugt, der dadurch entsprechend der Innentemperatur temperiert wird und einen entsprechenden Parameterwert für die Regelung der automatisch arbeitenden Heiz- bzw. Klimaanlage abgibt.

Bei einer durch die FR-A-25 07 700 bekannten Lüftungsanlage für Kraftfahrzeuge wird durch das Lüfterrad des Ventilators ein Hilfsluftstrom durch einen gesonderten Luftkanal aus dem Kraftfahrzeug-Innenraum über einen Sensor gefördert und entweder saug- oder druckseitig dem Haupt-Luftstrom zugeleitet.

Aufgabe der vorliegenden Erfindung ist es, bei einer automatisch arbeitenden Heiz- bzw. Klimaanlage gemäß Oberbegriff des Anspruchs 1 eine konstruktiv einfachere und platzsparendere, dabei jedoch trotzdem wirksame und geräuscharme Möglichkeit zur Innenraumluft-Beaufschlagung des Temperatur-Sensors ohne Beeinträchtigung des Haupt-Luftstromes schaffen zu können.

Die Lösung dieser Aufgabe ist bei einer automatisch arbeitenden Heiz- bzw. Klimaanlage der eingangs genannten Art erfindungsgemäß durch die Lehre des Anspruchs 1 möglich; vorteilhafte Ausgestaltungen dieser Erfindung sind jeweils Gegenstand der Unteransprüche.

Bei der erfindungsgemäßen Lösung kann der an sich in jeder, auch nicht automatisch auf eine vorgegebene Innenraumluft-Temperatur regelbare Heiz- bzw. Klimaanlage für ein Kraftfahrzeug vorhandene, vorzugsweise einflutige Radialventilator auf einfache Weise durch geringe konstruktive Ergänzung dazu mitverwendet werden, um unter Verzicht auf einen gesonderten Hilfsventilator mit eigenem Motorantrieb einen Hilfsluftstrom zur Beaufschlagung des Temperatur-Sensors aus dem Innenraum des Kraftfahrzeuges anzusaugen. In besonders einfacher konstruktiver Ausführung ist vorgesehen, daß die Zusatzschaufeln zur Ansaugung des Hilfsluftstromes am Lüfterrad am radial äußeren Teil unterhalb des Nabendoms angeordnet sind und daß der Luftkanal für den Hilfsluftstrom in eine Luft-Eintrittsöffnung in der Spiralgehäuse-Rückwand des Hauptventilators mündet; in weiterer herstellungstechnischer Vereinfachung werden die Zusatzschaufeln zweckmäßigerweise durch axial über den Nabendom überragende, entsprechend verlängerte Enden der Schaufeln für den Hauptluftstrom gebildet. Als Verbindung für den Hilfsluftstrom zwischen einem den Sensor aufnehmenden Sensorraum im Armaturenbrett und dem Gehäuse des Radialventilators ist nach einer Ausgestaltung der Erfindung ein flexibler Schlauch vorgesehen, dessen Enden zur einfachen Montage zweckmäßigerweise selbstspannend über entsprechend angeformte Hinterschnitte an den Lüftöffnungen des Sensorraums einerseits bzw. des Ventilator-Spiralgehäuses andererseits übergestülpt sind.

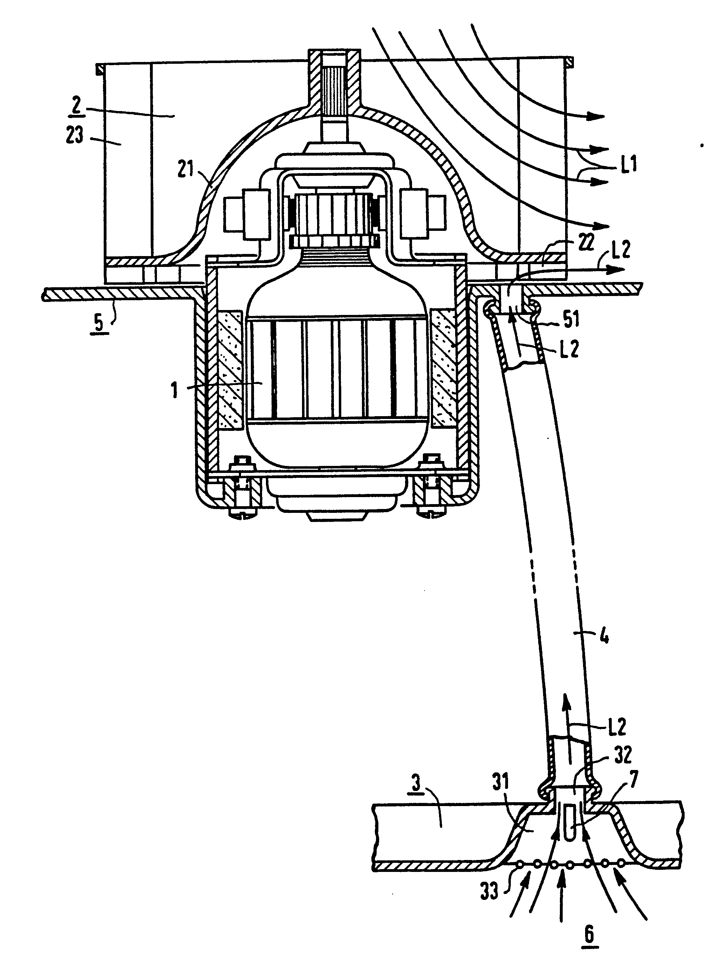

Die Erfindung wird im folgenden anhand eines Ausführungsbeispiels in der Zeichnung näher erläutert.

Das Ausführungsbeispiel zeigt in schematischer Darstellung im Längsschnitt einen Permanentmagnet-Gleichstrommotor 1, auf dessen oberem Läufer-Wellenende ein geschlossener Nabendom 21 eines Lüfterrades 2 befestigt ist, von dem ein Hauptluftstrom L1 in hier nicht näher dargestellter Weise in den Innenraum eines Kraftfahrzeuges gefördert wird. Das Lüfterrad 2 des hier vorgesehenen einflutigen Radialventilators ist in üblicher Weise von einem nur teilweise im Schnitt dargestellten Spiralgehäuse mit einer Spiralgehäuse-Rückwand 5 umgeben. Ein derartiger Ventilator zur Förderung eines Hauptluftstromes zur Belüftung des Innenraums eines Kraftfahrzeuges ist üblicherweise außerhalb des Fahrgastraumes in der Nähe des Armaturenbrettes angeordnet.

Zur selbsttätigen Temperaturregelung werden Temperatur und gegebenenfalls Menge der geförderten Luft in Abhänigkiet von u.U. mehreren Istwert-Parametern durch eine vorzugsweise elektronische Regelvorrichtung nach vorgebbaren Sollwerten selbsttätig eingeselit. Zur Istwert-Erfassung der jeweiligen Temperatur der Innenraumluft ist im Armaturenbrett ein durch ein Schutzgitter 33 zum Innenraum 6 geschützter Sensorraum 31 mit einem Temperatur-Sensor 7 vorgesehen; aus einer Luft-Austrittsöffnung 32 des Sensorraumes 3 wird ein Hilfs-Luftstrom L2 abgesaugt, durch den der in dem Sensorraum 31 angeordnete Temperatur-Sensor 7 beaufschlagbar ist; der Temperatur-Sensor 7 gibt dann einen der Innenraumluft-Temperatur entsprechenden Istwert an eine hier nicht dargestellte elektronische Regelanordnung.

Zur Absaugung des Hilfsluftstromes L2 aus dem Innenraum weist erfindungsgemäß das Lüfterrad 2 des für die Innenraumbelüftung vorgesehenen Ventilators zusätzlich außerhalb seines eigentlichen Hauptluftstromes L1 am radial äußeren Rand unterhalb des geschlossenen Nabendoms 21 Zusatzschaufeln 22 auf, mit Hilfe derer der Hilfs-Luftstrom L2 über einen als flexibler Schlauch 4 ausgebildeten Luftkanal aus den Innenraum 6 über den Sensorraum und den darin angeordneten Temperatur-Sensor 7 absaugbar ist. Der flexible Schlauch 4 mündet dazu mit seinem einen unteren Ende an der Luft-Eintrittsöffnung 32 des Sensorraumes 31 und mit seinem anderen oberen Ende an einer Luft-Eintrittsöffnung 51, die in der Spiralgehäuse-Rückwand 5 radial innen vor den Zusatzschaufeln 22 vorgesehen ist. In fertigungs- und montagetechnisch besonders einfacher Weise ist der flexible Schlauch 4 mit seinen Enden jeweils über entsprechende hinterschnittene Ränder an der Luft-Austrittsöffnung 32 bzw. an der Luft-Eintrittsöffnung 51 gestülpt und festgespannt. Nach einer Ausgestaltung der Erfindung sind in weiterer fertigungstechnischer Vereinfachung die Zusatzschaufeln 22 durch axial über den Nabendom 21 nach axial unten verlängerte Enden der Schaufeln 23 des den eigentlichen Hauptluftstrom L1 zum Belüften des Innenraums fördernden Lüfterrades 2 ausgebildet.

**Patentansprüche**

1. Heiz- bzw. Klimaanlage für Kraftfahrzeuge mit selbsttätiger Innenraumluft-Temperaturregelung, bei der die von einem Ventilator in den Innenraum eines Kraftfahrzeuges geförderte Innenraumluft (L1) im Sinne eines jeweils vorgebbaren Temperatur-Sollwertes unter Vermittlung eines Sensors temperierbar ist, der in einem Sensorraum zur Erfassung des jeweiligen Temperatur-Istwertes mit einem von einer Hilfsventilator-Anordnung aus dem Innenraum (6) des Kraftfahrzeuges abgesaugten Hilfs-Luftstrom (L2) beaufschlagbar ist, dadurch gekennzeichnet, daß zur Bildung der Hilfsventilator-Anordnung das Lüfterrad (2) des Ventilators außerhalb dessen eigentlichen Haupt-Luftstromes (L1) mit Zusatzschaufeln (22) versehen ist, mit Hilfe derer der Hilfs-Luftstrom (L2) über einen gesonderten Luftkanal (flexibler Schlauch 4) aus dem Kfz-Innenraum (6) und über den Sensor (7) absaugbar ist.

2. Heiz- bzw. Klimaanlage mit einem von einem Elektromotor angetriebenen Radial-Ventilator mit oberhalb eines geschlossenen Nabendoms (21) angeordneten Schaufeln (23) für den Hauptluftstrom (L1) und einem umgebenden Spiralgehäuse (5) nach Anspruch 1, dadurch gekennzeichnet, daß die Zusatzschaufeln (22) am radial äußeren Teil unterhalb des Nabendoms (21) des Lüfterrades (2) angeodnet sind und der Luftkanal (flexibler Schlauch 4) in eine Luft-Eintritts-Öffnung (51) in der Spiralgehäuse-Rückwand (5) des Ventilators mündet.

3. Heiz- bzw. Klimaanlage nach Anspruch 2, dadurch gekennzeichnet, daß die Zusatzschaufeln (22) durch axial den unteren Rand des Nabendoms (21) überragende, entsprechend verlängerte Enden der Schaufeln (23) des Lüfterrades (2) für den Hauptluftstrom (L1) gebildet sind.

4. Heiz- bzw. Klimaanlage, insbesondere mit einem im Armaturenbrett vorgesehenen Sensorraum, nach einem der Ansprüche 1 - 3, dadurch gekennzeichnet, daß für den Luftkanal zwischen dem Sensorraum (31) und dem Ventilator ein flexibler Schlauch (4) vorgesehen ist.

**Claims**

1. A heating or air conditioning apparatus for motor vehicles with automatic control of the interior air temperature, where the interior air, (L1), which is conveyed by a fan into the interior of a motor vehicle, can have its temperature controlled in accordance with a predeterminable theoretical temperature value by means of a sensor in a sensor chamber which can be supplied with an auxiliary air flow (L2) extracted from the interior (6) of the motor vehicle by an auxiliary fan arrangement in order to detect the respective actual temperature value, characterised in that the auxiliary fan arrangement is formed in that the rotor (2) of the fan is provided, outside its main airflow (L1), with additional blades (22) by means of which the auxiliary airflow (L2) can be extracted from the vehicle interior (6) via a special air channel (flexible tube 4) and over the sensor (7).

2. A heating or air conditioning apparatus comprising a radial fan which is driven by an electric motor and which is provided with blades (23), arranged above a closed hub dome (21), for the main airflow (L1) and with a surrounding spiral housing (5) as claimed in Claim 1, characterised in that the additional blades (22) are arranged at the radially external edge beneath the hub dome (21) of the rotor (2) and the air channel (flexible tube 4) leads into an air inlet opening (51) in the spiral housing rear wall (5) of the fan.

3. A heating or air conditioning apparatus as claimed in Claim 2, characterised in that the additional blades (22) are formed by appropriately extended ends, which project axially beyond the lower edge of the hub dome (21), of the blades (23) of the rotor (2) for the main airflow (L1).

4. A heating or air conditioning apparatus, in particular comprising a sensor chamber accommodated in the dashboard, as claimed in one of the Claims 1 to 3, characterised in that a flexible tube (4) for the air channel is arranged between the sensor chamber (31) and the fan.

**Revendications**

1. Installation de chauffage et de climatisation de véhicule automobile, à réglage automatique de la température de l'air de l'habitacle, dans laquelle l'air de l'habitacle (L1), envoyé par un ventilateur dans l'habitacle d'un véhicule automobile, peut être tempéré à une température de consigne pouvant être donnée à l'avance par l'intermédiaire d'un détecteur qui peut être alimenté, dans une chambre de détection destinée à la détection de la valeur réelle de la température, en un courant d'air auxiliaire (L2) aspiré, par un dispositif à ventilateur auxiliaire, de l'habitacle (6) du véhicule automobile, caractérisée en ce que, pour constituer le dispositif à ventilateur auxiliaire, la roue du ventilateur (2) est munie, en dehors de son courant d'air principal (L1) proprement dit, d'aubes supplémentaires (22), à l'aide desquelles le courant d'air auxiliaire (L2) peut être aspiré, par un conduit distinct (tuyau souple 4), de l'habitacle (6) du véhicule automobile sur le détecteur (7).

2. Installation de chauffage et de climatisation comprenant un ventilateur radial qui est entraîné par un moteur électrique, et qui a des aubes (23), disposées au-dessus d'un dôme de moyeu (21) et destinées au courant d'air principal (L1), et une volute (5) qui l'entoure suivant la revendication 1, caractérisée en ce que les aubes supplémentaires (22) sont disposées à la partie extérieure radiale en-dessous du dôme de moyeu (21) de la roue du ventilateur (2) et le conduit pour de l'air (tuyau souple 4) débouche dans une ouverture d'entrée d'air (51) ménagée dans la paroi postérieure (5) de la volute du ventilateur.

3. Installation de chauffage et de climatisation suivant la revendication 2, caractérisée en ce que les aubes supplémentaires (22) sont formées par des extrémités des aubes (23) de la roue du ventilateur (2) pour le courant d'air principal (L1), qui font saillie axialement du bord inférieur du dôme formant moyeu (21) et qui sont prolongées de manière adéquate.

4. Installation de chauffage et de climatisation ayant notamment une chambre à détecteur prévue dans le tableau de bord, suivant l'une des revendications 1 à 3, caractérisée en ce qu'il est prévu, pour le canal d'air, un tuyau souple (4) entre la chambre à détecteur (31) et le ventilateur.